(19) **Europäisches Patentamt / European Patent Office / Office européen des brevets**

(11) **EP 2 668 382 B1**

(12) **EUROPÄISCHE PATENTSCHRIFT**

(45) Veröffentlichungstag und Bekanntmachung des Hinweises auf die Patenterteilung:
**22.07.2015 Patentblatt 2015/30**

(21) Anmeldenummer: **11815749.4**

(22) Anmeldetag: **30.12.2011**

(51) Int Cl.:
***F01N 3/20*** *(2006.01)*

(86) Internationale Anmeldenummer:
**PCT/AT2011/000521**

(87) Internationale Veröffentlichungsnummer:
**WO 2012/100273 (02.08.2012 Gazette 2012/31)**

(54) **KATALYSATORANORDNUNG FÜR EINE ABGASREINIGUNGSVORRICHTUNG EINER BRENNKRAFTMASCHINE**

CATALYTIC CONVERTER ARRANGEMENT FOR AN EXHAUST-GAS CLEANING DEVICE OF AN INTERNAL COMBUSTION ENGINE

AGENCEMENT DE CATALYSATEURS POUR UN DISPOSITIF DE PURIFICATION DES GAZ D'ECHAPPEMENT D'UN MOTEUR A COMBUSTION INTERNE.

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.01.2011 AT 1142011**

(43) Veröffentlichungstag der Anmeldung:
**04.12.2013 Patentblatt 2013/49**

(73) Patentinhaber: **GE Jenbacher GmbH & Co OHG
6200 Jenbach (AT)**

(72) Erfinder: **GRUBER, Friedrich
A-6283 Hippach (AT)**

(74) Vertreter: **Gangl, Markus et al
Torggler & Hofinger
Patentanwälte
Wilhelm-Greil-Straße 16
6020 Innsbruck (AT)**

(56) Entgegenhaltungen:
**EP-A2- 0 881 366       EP-A2- 2 146 075
JP-A- 2008 223 758    US-A- 5 474 745**

## Beschreibung

Die Erfindung betrifft eine Abgasreinigungsvorrichtung für eine Brennkraftmaschine, insbesondere für einen stationären Gasmotor, mit wenigstens einer Katalysatoranordnung, wobei die wenigstens eine Katalysatoranordnung entlang einer Strömungsrichtung von einem Abgas der Brennkraftmaschine durchströmbar ist und entlang der Strömungsrichtung eine Mehrzahl von katalytisch aktiven, insbesondere voneinander unabhängigen, Bereichen umfasst, wobei eine Wärmeabführvorrichtung vorgesehen ist, welche mindestens eine Wärmeaufnahmevorrichtung und eine Wärmesenke umfasst, wobei zumindest zwischen zwei katalytisch aktiven Bereichen die mindestens eine Wärmeaufnahmevorrichtung vorgesehen ist, wobei die mindestens eine Wärmeaufnahmevorrichtung mit der Wärmesenke kontaktiert ist.

Moderne Hochleistungs-Magermotoren, insbesondere stationäre Gasmotoren, weisen sehr hohe Leistungsdichten und Wirkungsgrade bei relativ geringen Herstell- und Wartungskosten auf. Aus diesem Grund zählen Gas-Magermotor-Anlagen zu den wirtschaftlichsten Energieerzeugungstechnologien auf dem Markt. Im Vergleich zu Dieselmotoren sind auch die Schadstoffemissionen sehr gering, wobei die NOx-Emissionen durch innermotorische und die CO- und Formaldehydemissionen durch abgaskatalytische Maßnahmen auf sehr geringe Werte reduziert werden können. Bei den unverbrannten Kohlenwasserstoffen, insbesondere bei Methan (CH4), weisen erdgasbetriebene Magermotoren hingegen relativ hohe Emissionswerte auf. Im Gegensatz zu CO können übliche Abgasreinigungsvorrichtungen CH4 nur in sehr geringem Maße umsetzen. Zur Erzielung ausreichend hoher Umsetzungsraten sind neben speziellen Formulierungen für die aktive Oberfläche der Katalysatoranordnungen von Abgasreinigungsvorrichtungen auch Temperaturen von mindestens etwa 600 °C erforderlich.

Da die Abgastemperatur moderner hochaufgeladener Gas-Magermotoren nach einem Abgasturbolader nur etwa 300 - 400 °C beträgt, kann eine für CH4 aktive Abgasreinigungsvorrichtung nicht nach dem Abgasturbolader eingesetzt werden. Um eine entsprechende Reaktion zur Umsetzung von unverbrannten Kohlenwasserstoffen in einer Abgasreinigungsvorrichtung eines hochaufgeladenen Gas-Magermotors zu erzielen, muss daher die Abgasreinigungsvorrichtung vor einer Abgasturbine angeordnet sein. Dadurch kann sichergestellt werden, dass die für diese chemische Reaktion nötige Temperatur vorhanden ist.

Bei der Umsetzung der unverbrannten Kohlenwasserstoffe wird ein Teil der darin enthaltenen chemischen Energie durch die chemische Reaktion in Wärme umgewandelt. Da die Reaktionsrate in der Abgasreinigungsvorrichtung eine Funktion der Temperatur ist, erfolgt die Umsetzung rascher und vollständiger, je höher die Temperatur ist. Sobald daher die Konzentration an unverbrannten Kohlenwasserstoffen ein bestimmtes Maß überschreitet, führt die Temperaturerhöhung aufgrund der Reaktion zu einer Steigerung der Reaktionsrate und damit zu einem selbstverstärkenden Vorgang. Die Temperatur steigt immer weiter an, bis die gesamten, im Abgas enthaltenen unverbrannten Kohlenwasserstoffe auf einer sehr kurzen Wegstrecke vollständig umgesetzt werden. Bei entsprechend erhöhten Konzentrationen an unverbrannten Kohlenwasserstoffen kommt es in der Folge lokal zu einer thermischen Überlastung des Katalysatorträgers oder sogar zum Schmelzen von Trägermaterial der Katalysatoranordnungen. Dieser Effekt wird im Falle des Einbaues der Abgasreinigungsvorrichtung vor einer Abgasturbine noch dadurch verstärkt, dass das Abgas unter einem Druck von etwa 3 - 4 bar vorliegt und die Energiedichte der in den unverbrannten Kohlenwasserstoffen enthaltenen chemischen Energie damit entsprechend erhöht ist. Zu den massivsten Problemen zählt dabei die thermische Zerstörung von Bereichen einer Abgasreinigungsvorrichtung durch zu hohe Konzentrationen an unverbrannten Kohlenwasserstoffen, wie sie beispielsweise bei Zündaussetzern vorkommen. Zündaussetzer können bei Gasmotoren jedoch kaum grundsätzlich vermieden werden.

Als Gegenmaßnahme gegen eine solche verstärkt auftretende Korrosion eines Katalysatorträgerkörpers aufgrund von durch unverbrannte Kohlenwasserstoffe verursachte starke exotherme Reaktionen zeigt beispielsweise die DE 100 46 278 A1 einen Katalysatorträgerkörper, welcher in Strömungsrichtung des Abgases zwei unterschiedliche Zonen aufweist, wobei die erste Zone eine höhere oberflächenspezifische Wärmekapazität aufweist als die zweite Zone. Dadurch wird dem Abgas in der ersten Zone relativ viel thermische Energie entzogen, wodurch einer verstärkten Korrosion in der zweiten Zone entgegengewirkt werden kann. Nachteilig hierbei ist jedoch, dass die Wärmeaufnahme durch die Katalysatorträgerkörper selbst erfolgt. Da die Wärmekapazität und die Wärmeleitfähigkeit der Katalysatorträgerkörper begrenzt sind, erfolgt dabei nur eine geringfügige Ableitung der entstehenden Wärme aus der Katalysatoranordnung in die umgebende Struktur.

Aus der US 5,474,745 A und der EP 1 111 212 A2 sind auch Abgasreinigungsvorrichtungen mit jeweils einer Katalysatoranordnung bekannt, die Kühleinrichtungen zur Abfuhr von Wärme aus der Katalysatoranordnung aufweisen.

Aufgabe der Erfindung ist es, eine gegenüber dem Stand der Technik verbesserte Abgasreinigungsvorrichtung für eine Brennkraftmaschine anzugeben. Insbesondere soll eine Abgasreinigungsvorrichtung zur Reduktion von unverbrannten Treibstoffkomponenten angegeben werden, welche die vorgenannten Probleme bei starken Exothermien vermeidet. Die Abgasreinigungsvorrichtung soll dabei insbesondere eine hohe Toleranz gegenüber kurzzeitigen Kohlenwasserstoffspitzen aufweisen, welche beispielsweise durch Zündaussetzer oder Unterbrechungen in der motorischen Verbrennung, z.B. durch gezielte selektive Zylinderabschaltung bei Lastabwürten, auftreten können. Darüber hinaus soll die Wartbarkeit der Abgasreinigungsvorrichtung erleichtert werden.

Diese Aufgabe wird erfindungsgemäß dadurch gelöst, dass die Abgasreinigungsvorrichtung eine Mehrzahl von Katalysatoranordnungen und ein, insbesondere rohrförmiges, Innengehäuse mit einem Gehäusemantel sowie ein das Innengehäuse umschließendes Außengehäuse umfasst, wobei das Innengehäuse eine Längsachse aufweist, wobei die Katalysatoranordnungen getrennt voneinander am Gehäusemantel des Innengehäuses angeordnet sind.

Dadurch, dass die Katalysatoranordnungen am Innengehäuse angeordnet sind, kann eine möglichst direkte Wärmeableitung aus den Katalysatoranordnungen in das Innengehäuse der Abgasreinigungsvorrichtung erfolgen. Ganz generell stellen die in den Katalysatoranordnungen vorgesehenen Wärmeabführvorrichtungen umfassend mindestens eine Wärmeaufnahmevorrichtung und eine Wärmesenke sowie das Innengehäuse Wärmekapazitäten dar. Durch diese Wärmekapazitäten kann generell eine Temperaturstabilisierung der Abgasreinigungsvorrichtung erzielt werden, insbesondere wenn die Wärmeaufnahmevorrichtungen, die Wärmesenken (z.B. die Gehäuse der Katalysatoranordnungen) und das Innengehäuse der Abgasreinigungsvorrichtung gut wärmeleitend in Verbindung stehen. Durch die vorgeschlagene Anordnung einer Mehrzahl von Katalysatoranordnungen am Innengehäuse einer Abgasreinigungsvorrichtung kann gezielt und effizient Wärme aus den Katalysatoranordnungen in das Innengehäuse abgeführt werden. Dadurch, dass eine Mehrzahl von Katalysatoranordnungen getrennt voneinander am Innengehäuse angeordnet sind, können zwischen den Katalysatoranordnungen im Wesentlichen freiliegende Bereiche des Innengehäuses angeordnet sein. Diese Stege zwischen den Katalysatoranordnungen wirken ebenfalls temperaturstabilisierend im Sinne einer Wärmekapazität. Sie können auch die Wärmeabfuhr begünstigen. Somit ergeben der innere Aufbau der Katalysatoranordnungen mit Wärmeabführvorrichtungen und die Anordnung der Katalysatoranordnungen am Innengehäuse einer Abgasreinigungsvorrichtung einen vorteilhaften synergetischen Effekt in Bezug auf die Temperaturstabilisierung bzw. den Temperaturausgleich, insbesondere die Wärmeabfuhr, der Abgasreinigungsvorrichtung.

Die Katalysatoranordnungen können vorzugsweise so angeordnet sein, dass ihre Strömungsrichtung im Wesentlichen quer zur Längsachse des Innengehäuses verläuft, sodass die Katalysatoranordnungen vom Gehäuse aus betrachtet radial durchströmt werden können. Durch eine solche Anordnung der Katalysatoranordnungen entlang der Längsachse des Innengehäuses kann erreicht werden, dass die Strömungsgeschwindigkeit in der Abgasreinigungsvorrichtung und damit der Zustrom von unverbrannten Abgaskomponenten auf die Oberflächen der katalytisch aktiven Bereiche bei gleichbleibender Raumgeschwindigkeit maßgeblich reduziert werden kann. Weiters kann dadurch das gesamte Katalysatorvolumen auf eine Vielzahl von einzelnen Katalysatoranordnungen aufgeteilt werden, die jeweils einen relativ geringen Durchmesser aufweisen.

Zur Angabe der spezifischen Abgasleistung einer Abgasreinigungsvorrichtung wird der Abgasdurchsatz durch die Abgasreinigungsvorrichtung üblicherweise auf das gesamte Volumen der katalytisch aktiven Bereiche bezogen und als Raumgeschwindigkeit bezeichnet. Üblicherweise beträgt die Raumgeschwindigkeit von Abgasreinigungsvorrichtungen zwischen 40.000 und 100.000 h$^{-1}$, d.h. pro Stunde strömt durch die Abgasreinigungsvorrichtung eine Abgasmenge entsprechend dem 40.000 bzw. 100.000 fachen des gesamten Volumens der katalytisch aktiven Bereiche. Diesen Werten für die Raumgeschwindigkeit entsprechen auf die freie Eintrittsfläche der katalytisch aktiven Bereiche bezogene Werte für die Strömungsgeschwindigkeit von ca. 3 - 7 m/s. Entsprechend der Strömungsgeschwindigkeit liefert das Abgas die in den unverbrannten Kohlenwasserstoffen enthaltene chemische Energie nach, von der ein Teil durch die chemische Reaktion in Wärme umgewandelt in die Trägerkörper der Katalysatoranordnungen der Abgasreinigungsvorrichtung eingeleitet wird.

Die Summe der Eintrittsflächen der Katalysatoranordnungen kann dabei zum Abgasvolumenstrom (bezogen auf die Nennleistung des Motors) entsprechend der geforderten Raumgeschwindigkeit in einem definierten Verhältnis stehen, entsprechend der Formel:

$$A = \frac{Q}{(v \cdot l)}$$

wobei A der Summe der Eintrittsflächen der Katalysatoranordnungen, Q dem Abgasvolumenstrom, v der geforderten Raumgeschwindigkeit und I der gesamten Länge der katalytisch aktiven Bereiche entspricht. Nach dieser Formel ergibt sich beispielsweise bei einem Abgasvolumenstrom von 1.000 m$^3$/h, einer Raumgeschwindigkeit von 40.000 h$^{-1}$ und einer gesamten Länge der katalytisch aktiven Bereiche einer Abgasreinigungsvorrichtung von 0,1 m eine benötigte Summe der Eintrittsflächen der Katalysatoranordnungen von 0,25 m$^2$.

Als Innengehäuse der Abgasreinigungsvorrichtung kann beispielsweise ein gekantetes, vorzugsweise mindestens 3 mm starkes, wärmefestes Stahlblech zum Einsatz kommen, dessen Querschnitt quer zur Längsachse mehreckig sein kann. So ergibt z.B. ein achteckiger Querschnitt des Gehäusemantels des Innengehäuses acht in Richtung der Längsachse des Innengehäuses verlaufende Seitenflächen, wobei an jeder Seitenfläche in Richtung der Längsachse Katalysatoranordnungen angeordnet sein können. Die Anzahl der Seitenflächen kann dabei abhängig vom Abgasvolumenstrom durch die Abgasreinigungsvorrichtung ausgeführt sein. So kann der Querschnitt des Gehäusemantels des Innengehäuses beispielsweise bis 2.000 m$^3$/h quadratisch, im Bereich von 1.500 bis 5.000 m$^3$/h sechseckig, im Bereich von 4.000 bis 12.000 m$^3$/h achteckig und im Bereich > 12.000 m$^3$/h zwölfeckig ausgeführt sein.

Weiters kann bei einer vorgeschlagenen Abgasreinigungsvorrichtung vorgesehen sein, dass das Innengehäuse eine Abgaseinlassöffnung aufweist, wobei die Mehrzahl von Katalysatoranordnungen ausgehend von der Abgaseinlassöffnung entlang der Längsachse in geringer werdenden radialen Abständen von der Längsachse angeordnet sind. Dabei verringert sich ausgehend von der Abgaseinlassöffnung der lichte Durchmesser des Innengehäuses entlang der Längsachse. Dies kann beispielsweise dadurch erreicht werden, dass der Gehäusemantel des Innengehäuses mehrere Abschnitte mit unterschiedlichen Querschnittsdurchmessern aufweist. Alternativ oder zusätzlich zum Gehäusemantel mit unterschiedlichen Durchmessern können auch die Katalysatoranordnungen in unterschiedlichen radialen Abständen von der Längsachse des Innengehäuses an diesem angeordnet sein. Durch eine solche Anordnung der Katalysatoranordnungen kann insbesondere bei verhältnismäßig großen axialen Abmessungen des Innengehäuses das durch die Abgaseinlassöffnung einströmende Abgas gleichmäßig auf die Katalysatoranordnungen verteilt werden.

Weiters kann eine Heizvorrichtung zum Beheizen der katalytisch aktiven Bereiche zumindest einer der Mehrzahl von Katalysatoranordnungen vorgesehen sein. Vorzugsweise kann zwischen jeweils zwei entlang der Richtung der Längsachse angeordneten Katalysatoranordnungen jeweils eine Heizvorrichtung angeordnet sein. Die Heizvorrichtungen dienen insbesondere während eines Kaltstarts der Brennkraftmaschine zur raschen Temperaturerhöhung der Abgasreinigungsvorrichtung, um eine rasche katalytische Aktivität der Abgasreinigungsvorrichtung herbeiführen zu können. Die Heizvorrichtungen können dabei beispielsweise beheizte Drähte sein. Alternativ oder zusätzlich kann auch die mindestens eine Wärmeaufnahmevorrichtung für eine Beheizung verwendet werden.

Durch die vorgeschlagene Wärmeabführvorrichtung einer Katalysatoranordnung soll insbesondere Wärme, die bei der Umsetzung von unverbrannten Kohlenwasserstoffanteilen in der Katalysatoranordnung entsteht, abführbar sein. Die vorzugsweise zwei bis vier katalytisch aktiven Bereiche einer Katalysatoranordnung können dabei unabhängig voneinander sein. Zwischen mindestens zwei katalytisch aktiven Bereichen ist dabei eine Wärmeaufnahmevorrichtung vorgesehen, welche die entstehende Wärme aufnehmen und durch thermische Kontaktierung mit einer Wärmesenke entsprechend ableiten kann. Die Wärmesenke kann dabei vorzugsweise durch ein Gehäuse gebildet sein, welches die Katalysatoranordnung umschließt und mit dessen mindestens einen Wärmeaufnahmevorrichtung thermisch kontaktiert bzw. gekoppelt ist. Gemäß einer vorteilhaften Weiterbildung kann dabei zwischen Katalysatoranordnung und Gehäuse eine gut wärmeleitfähige Wärmetransportvorrichtung, vorzugsweise eine Metallfasermatte oder eine Einbettmasse, vorgesehen sein.

Eine bevorzugte Ausführungsform der Erfindung sieht dabei vor, dass die Mehrzahl von katalytisch aktiven Bereichen jeweils einen Trägerkörper umfasst, wobei auf dem Trägerkörper zumindest ein Katalysator, vorzugsweise eine Mehrzahl von Katalysatoren, aufgebracht ist. Als Katalysatoren kommen dabei häufig Edelmetalle wie Platin, Palladium und Rhodium zum Einsatz. Bevorzugt kann dabei vorgesehen sein, dass die Katalysatoranordnung in Strömungsrichtung einen ersten katalytisch aktiven Bereich und einen zweiten katalytisch aktiven Bereich aufweist, wobei der Trägerkörper des ersten katalytisch aktiven Bereichs eine geringere Katalysatorenbeladung aufweist als der Trägerkörper des zweiten katalytisch aktiven Bereichs.

In einer weiteren Ausführungsform der Erfindung kann diese so ausgeführt sein, dass zwischen jeweils zwei in Strömungsrichtung aufeinanderfolgenden katalytisch aktiven Bereichen jeweils eine Wärmeaufnahmevorrichtung vorgesehen ist. Dabei kann natürlich auch vorgesehen sein, dass in Strömungsrichtung vor dem ersten und nach dem letzten katalytisch aktiven Bereich jeweils eine Wärmeaufnahmevorrichtung vorgesehen ist.

Bei herkömmlichen Katalysatoranordnungen sind die Trägerkörper üblicherweise mittels keramischer Quellmatten (z.B. aus Glimmer-Verbindungen) im Gehäuse verpresst. Diese Quellmatten haben die Aufgabe, die unterschiedlichen Wärmeausdehnungen von Trägerkörper und Gehäuse auszugleichen, sowie die Katalysatoranordnung thermisch zu isolieren. Es soll damit also möglichst wenig Wärme vom Inneren der Katalysatoranordnung in das die Katalysatoranordnung umgebende Gehäuse abgeführt werden. Bei der vorgeschlagenen Katalysatoranordnung soll jedoch genau das Gegenteil erzielt werden: um der starken Wärmeentwicklung durch die Umsetzung unverbrannter Kohlenwasserstoffe entgegenwirken zu können, soll möglichst viel Wärme abgeführt werden. Dafür sind im Inneren der Katalysatoranordnung Wärmeaufnahmevorrichtungen vorgesehen, welche die entstehende Wärme vorzugsweise mittels einer gut wärmeleitfähigen Wärmetransportvorrichtung (z.B. eine Metallfasermatte oder Einbettmasse mit einer hohen Wärmeleitfähigkeit) zu einer Wärmesenke, beispielsweise das die Katalysatoranordnung umgebende Gehäuse, abführen. Eine solche gut wärmeleitfähige Wärmetransportvorrichtung wirkt temperaturstabilisierend, sodass eine thermische Entlastung der Katalysatoranordnung bei kurzfristig auftretenden Temperaturspitzen ermöglicht werden kann. Das Gehäuse kann dabei vorzugsweise die Katalysatoranordnung in Strömungsrichtung des Abgases mantelförmig umschließen.

Gemäß einer besonders bevorzugten Ausführungsform kann vorgesehen sein, dass der Trägerkörper ein Keramikträger ist. Die Keramik des Trägerkörpers kann dabei beispielsweise Cordierit umfassen. Der Trägerkörper kann aus einer Scheibe mit einer Dicke von 40 - 60 mm, vorzugsweise 50 mm, gebildet sein. Im Falle von kreisrunden Scheiben kann dabei der Durchmesser der Scheibe 120 - 160 mm, vorzugsweise 140 mm betragen. Die Wandstärke des Trägers kann > 0,25 mm, vorzugsweise mindestens 0,3 mm betragen, um eine erhöhte Wärmekapazität des Trägers zu gewährleisten.

In einer besonders bevorzugten Ausführungsform der Erfindung kann vorgesehen sein, dass die mindestens eine Wärmeaufnahmevorrichtung zumindest teilweise aus einem Material mit guter Wärmeleitfähigkeit besteht und/oder dass die mindestens eine Wärmeaufnahmevorrichtung zumindest teilweise aus einem Material mit hoher Wärmekapazität besteht. Unter einem Material mit guter Wärmeleitfähigkeit wird im Rahmen der Erfindung ein Material mit einer Wärmeleitfähigkeit > 10 W/mK, vorzugsweise > 20 W/mK verstanden. Dies trifft beispielsweise auf bestimmte Messinglegierungen oder Kupfer-Nickel-Legierungen zu, etwa auf die Legierung CuNi2Si (SB22) mit rund 250 W/mK. Unter einem Material mit hoher Wärmekapazität wird im Rahmen der Erfindung ein Material mit einer spezifischen Wärmekapazität > 0,4 kJ/kgK verstanden.

Generell kann jedoch als Wärmeaufnahmevorrichtung auch ein unbeschichteter Trägerkörper zum Einsatz kommen, wobei in diesem Fall vorzugsweise die Zellwandstärke höher gewählt wird, um eine höhere Wärmekapazität zu erreichen.

Besonders vorteilhaft ist jene Ausführungsform der Erfindung, bei der die mindestens eine Wärmeaufnahmevorrichtung mindestens eine Drahtgitterlage umfasst. Eine Drahtgitterlage kann dabei aus im Wesentlichen geraden, kreuzweise angeordneten Stäben bzw. Drähten mit vorzugsweise jeweils ca. 1,5 - 2,5 mm Durchmesser gebildet sein. Die bevorzugten Materialien für die Stäbe bzw. Drähte sind dabei Stahl (niedrig legiert), Messing, Nickel, Legierungen oder spezielle Keramiken mit hoher Wärmeleitfähigkeit und zugleich hoher Wärmekapazität.

Vorzugsweise können 4 - 7 Drahtgitterlagen je Wärmeaufnahmevorrichtung eingesetzt werden. Der Abstand zwischen den einzelnen Stäben bzw. Drähten innerhalb einer Ebene bzw. Drahtgitterlage kann dabei ca. 1,5 - 2,5 mm betragen. Die Drahtgitterlagen können dabei in flexible Halterungen oder Klemmen eingefasst werden, wobei hierbei keine Dichtheit erforderlich ist. Die mindestens eine Wärmeaufnahmevorrichtung kann auch mehrere deckungsgleich oder versetzt zueinander übereinander angeordnete Drahtgitterlagen umfassen und insgesamt in Strömungsrichtung eine Schichtstärke von ca. 5 - 15 mm aufweisen.

Bei einer vorteilhaften Ausführungsform der Erfindung kann eine Feinabstimmung der Drahtabstände und Anzahl der Drahtgitterlagen derart vorgenommen werden, dass sich bei einer Strömungsgeschwindigkeit des Abgases bezogen auf die freie Anströmfläche von ca 1 m/s ein Druckverlust von 4 - 7 mbar einstellt. Neben der Wärmeabfuhr kann dadurch die mindestens eine Wärmeaufnahmevorrichtung zu einer Homogenisierung der Strömung über den Querschnitt, bezogen auf die Strömungsrichtung des Abgases, beitragen. Durch eine entsprechende Anordnung der mindestens einen Drahtgitterlage kann aber auch eine erhöhte Turbulenzerzeugung in der Abgasströmung erzielt werden, durch die die Reaktivität des Abgases im in Strömungsrichtung nachfolgenden katalytisch aktiven Bereich erhöht werden kann.

Vorzugsweise kann vorgesehen sein, dass die mindestens eine Wärmeaufnahmevorrichtung einen Metall- oder Keramikschaum umfasst. Ein Metall- oder Keramikschaum kann sich besonders günstig auf eine Strömungsvergleichmäßigung und eine Wärmeverteilung bzw. Temperaturstabilisierung auswirken. Der verwendete Metall- oder Keramikschaum zeichnet sich dabei vorzugsweise durch eine große spezifische Oberfläche, eine hohe Wärmeleitfähigkeit, eine hohe Wärmekapazität, sowie eine hohe Temperatur- und Korrosionsbeständigkeit aus. Die mindestens eine Wärmeaufnahmevorrichtung kann auch als Schwamm oder als Hohlkugelstruktur ausgebildet sein.

Um den Wärmeabfureffekt der Wärmeabführvorrichtung zu intensivieren, kann weiters eine Kühlvorrichtung zur aktiven Kühlung der mindestens einen Wärmeaufnahmevorrichtung vorgesehen sein.

Zum Vorwärmen der Mehrzahl von katalytisch aktiven Bereichen, beispielsweise bei einem Kaltstart der Brennkraftmaschine, kann zumindest eine Heizeinrichtung vorgesehen sein. Diese kann beispielsweise als Heizmatte ausgeführt sein und in Strömungsrichtung nach einer Wärmeaufnahmevorrichtung und vor einem katalytisch aktiven Bereich angeordnet sein. Eine solche Heizeinrichtung dient insbesondere bei einem Kaltstart der Brennkraftmaschine zur Erzielung eines stabilen Temperaturzustands in der Katalysatoranordnung.

Als besonders vorteilhaft hat es sich herausgestellt, wenn das Gehäuse der Katalysatoranordnung zumindest eine Befestigungsvorrichtung zur Befestigung der Katalysatoranordnung an einem Gehäuseteil einer Abgasreinigungsvorrichtung aufweist. Die Befestigungsvorrichtungen können dabei beispielsweise als mehrere, vom vorzugsweise mantelförmigen Gehäuse abstehende, Halterungselemente (z.B. Fixierringe) ausgeführt sein, durch die die Katalysatoranordnung mit dem Innengehäuse einer Abgasreinigungsvorrichtung z.B. verschraubt werden kann. Wenn sowohl das Gehäuse der Katalysatoranordnung als auch das Innengehäuse der Abgasreinigungsvorrichtung aus einem gut wärmeleitfähigen Material bestehen (z.B. Stahlblech), so kann ausgehend von der mindestens einen Wärmeaufnahmevorrichtung über beispielsweise eine gut wärmeleitfähige Wärmetransportvorrichtung (z.B. Einbettmasse) bis zum Gehäuse der Katalysatoranordnung und zum Innengehäuse der Abgasreinigungsvorrichtung, welche in diesem Fall die Wärmesenke bilden, eine gute Wärmeabfuhr erzielt werden.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:

Fig. 1a      ein Beispiel der vorgeschlagenen Katalysatoranordnung in einer Schnittdarstellung längs zur Strömungsrichtung,

Fig. 1b      ein Diagramm der Konzentration unverbrannter Kohlenwasserstoffe entlang der katalytisch aktiven Bereiche einer Katalysatoranordnung gemäß Fig. 1 a,

Fig. 2      ein weiteres Beispiel einer vorgeschlagenen Katalysatoranordnung in einer Schnittdarstellung längs zur Strömungsrichtung,

Fig. 3a      den schematischen Aufbau einer Abgasreinigungsvorrichtung mit Ausführungsbeispielen der vorgeschlagenen Katalysatoranordnungen,

Fig. 3b      eine Schnittdarstellung quer zur Längsachse des Innengehäuses der Abgasreinigungsvorrichtung gemäß Fig. 3a,

Fig. 4, Fig. 5      Ausführungsbeispiele für verschiedene Anordnungen der vorgeschlagenen Katalysatoranordnungen an einem Innengehäuse einer Abgasreinigungsvorrichtung,

Fig. 6, Fig. 7      schematische Darstellungen von weiteren Anordnungsvarianten von vorgeschlagenen Katalysatoranordnungen in einer Abgasreinigungsvorrichtung mit Heizvorrichtungen,

Fig. 8      ein weiteres Beispiel einer Abgasreinigungsvorrichtung mit vorgeschlagenen Katalysatoranordnungen und

Fig. 9      ein weiteres Beispiel einer Abgasreinigungsvorrichtung mit einer Stellvorrichtung zum Beeinflussen der Abgasströmung.

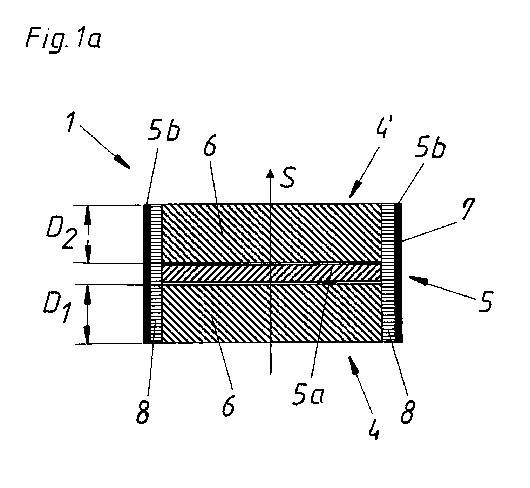

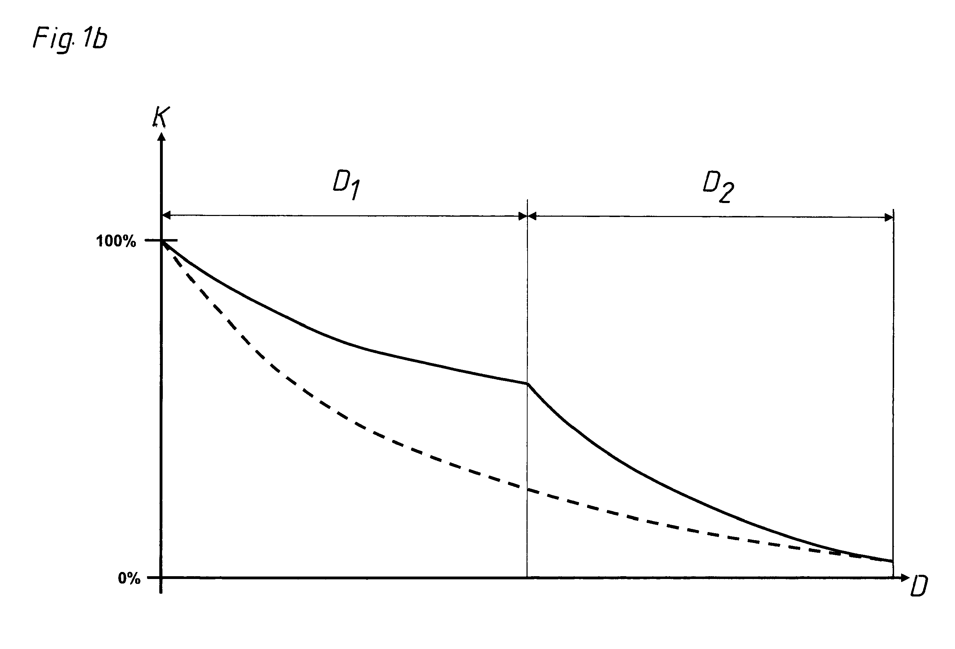

Fig. 1 a zeigt eine Schnittdarstellung entlang der Strömungsrichtung S eines Ausführungsbeispiels einer vorgeschlagenen Katalysatoranordnung 1. Die Katalysatoranordnung 1 umfasst zwei katalytisch aktive Bereiche 4, 4', die jeweils einen Trägerkörper 6 umfassen. Der Trägerkörper 6 des in Strömungsrichtung S ersten katalytisch aktiven Bereiches 4 weist dabei eine geringere Beladung mit Katalysatoren auf als der Trägerkörper 6 des in Strömungsrichtung S zweiten katalytisch aktiven Bereichs 4'. Dadurch weist der in Strömungsrichtung S erste katalytisch aktive Bereich 4 im Vergleich zum zweiten katalytisch aktiven Bereich 4' eine geringere katalytische Aktivität auf, wodurch die Umsetzung der unverbrannten Treibstoffkomponenten über die gesamte Katalysatorlänge erfolgen kann. Die Trägerkörper 6 der beiden katalytisch aktiven Bereiche 4, 4' können dabei beispielsweise kreisrunde Keramikmatrixscheiben mit Scheibendicken D1, D2 von ca. 45 mm und Durchmessern von ca. 140 mm sein.

Die Wandstärke der Keramikmatrix kann dabei ca. 0,3 mm betragen, um die Wärmekapazität der Keramikmatrix und den thermischen Widerstand gegenüber einem raschen Temperaturanstieg entsprechend zu erhöhen. Zwischen den beiden Trägerkörpern 6 der katalytisch aktiven Bereiche 4, 4' ist eine Wärmeaufnahmevorrichtung 5a angeordnet, wobei diese Wärmeaufnahmevorrichtung 5a vorzugsweise einen Werkstoff mit guter Wärmeleitfähigkeit und/oder hoher Wärmekapazität umfasst, um auftretende Temperaturspitzen entsprechend abführen und/oder absorbieren zu können. Die Wärmeaufnahmevorrichtung 5a kann beispielsweise aus einer oder mehreren Drahtgitterlagen bestehen, wobei die Gitterstäbe jeweils Durchmesser von etwa 1,5 bis 2,5 mm aufweisen können. Die Drahtgitterlagen können dabei temperaturstabilisierend und je nach Anordnung auch turbulenzenerzeugend wirken. Durch erhöhte Turbulenzen in der Abgasströmung kann eine erhöhte Reaktion im in Strömungsrichtung S nachfolgenden katalytisch aktiven Bereich 4' erzielt werden.

Die gezeigte Anordnung aus zwei katalytisch aktiven Bereichen 4, 4' und dazwischen angeordneter Wärmeaufnahmevorrichtung 5a ist mittels gut wärmeleitfähiger Wärmetransportvorrichtung 8 in ein mantelförmiges Gehäuse 7 eingebettet, welches als Wärmesenke 5b fungiert. Die Wärmetransportvorrichtung 8 kann dabei beispielsweise eine Metallfasermatte sein, welche die Wärme der Trägerkörper 6 und der Wärmeaufnahmevorrichtung 5a in Richtung Gehäuse 7, welches beispielsweise ein Stahlblechzylindermantel sein kann, ableiten kann.

Fig. 1b zeigt ein Diagramm der Konzentration K der im Abgasstrom enthaltenen unverbrannten Kohlenwasserstoffanteile über die Dicke D der vom Abgas in Strömungsrichtung S durchströmten katalytisch aktiven Bereiche 4, 4' gemäß Fig. 1 a. Die x-Achse dieses Diagramms zeigt die Schichtdicken D1, D2 der beiden katalytisch aktiven Bereiche 4, 4' der Anordnung gemäß Fig. 1a, welche in Strömungsrichtung S vom Abgasstrom durchströmt werden. Die y-Achse zeigt die Konzentration K der unverbrannten Kohlenwasserstoffe im Abgasstrom. Als Referenzwert wird hierbei die Konzentration K beim Eintritt in den ersten katalytisch aktiven Bereich 4 betrachtet. Dieser Referenzwert wird mit 100 % angegeben. Entsprechend der Beladung mit Katalysatoren erfolgt eine Abnahme der Konzentration K entlang der Scheibendicke D1 des ersten katalytisch aktiven Bereichs 4. Der zweite katalytisch aktive Bereich 4' weist gegenüber dem ersten katalytisch aktiven Bereich 4 eine höhere Beladung mit Katalysatoren auf, wodurch dieser zweite katalytisch aktive Bereich 4' eine höhere katalytische Aktivität aufweist und die Konzentration K an unverbrannten Kohlenwasserstoffen im Abgasstrom entsprechend rascher abnimmt. Durch eine solche ungleiche Beladung mit Katalysatoren kann errichtet werden, dass die Umsetzung der unverbrannten Kohlenwasserstoffe besser auf die betroffenen katalytisch aktiven Bereiche 4, 4' verteilt wird. Es soll dadurch vermieden werden, dass der Großteil der unverbrannten Kohlenwasserstoffe bereits in dem in Strömungsrichtung S ersten katalytisch aktiven Bereich 4 umgesetzt wird, da die Wärmefront ohnehin entgegen der Strömungsrichtung S wandert. Mit anderen Worten soll erreicht werden, dass auch in katalytisch aktiven Bereichen 4', welche dem ersten katalytisch aktiven Bereich 4 in Strömungsrichtung S nachfolgen, noch unverbrannte Kohlenwasserstoffe umgesetzt werden. Es kann aber natürlich auch vorgesehen sein, dass beide katalytisch aktiven Bereiche 4, 4' dieselbe Beladung an Katalysatoren aufweisen. Diesen Fall zeigt die strichlierte Kurve im Diagramm.

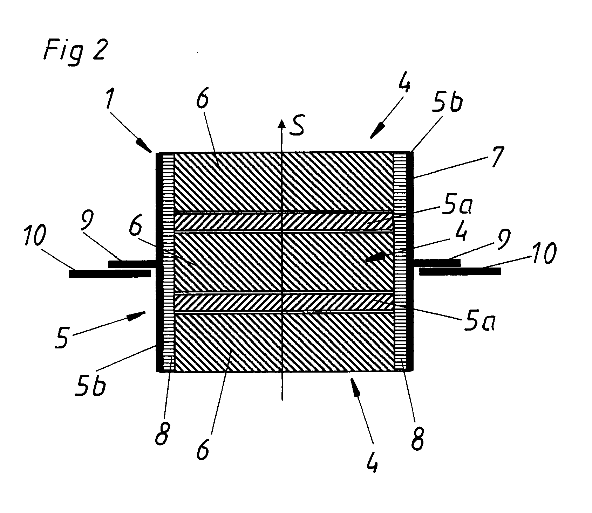

Fig. 2 zeigt ein weiteres Ausführungsbeispiel der vorgeschlagenen Katalysatoranordnung 1 in einer Schnittdarstellung entlang der Strömungsrichtung S. In diesem Beispiel weist die Katalysatoranordnung 1 insgesamt drei katalytisch aktive Bereiche 4 auf, wobei zwischen jeweils zwei in Strömungsrichtung S aufeinanderfolgenden katalytisch aktiven Bereichen 4 eine Wärmeaufnahmevorrichtung 5a vorgesehen ist. Die gesamte Anordnung ist mittels einer gut wärmeleitfähigen Einbettmasse, welche eine Wärmetransportvorrichtung 8 bildet, in ein zylindermantelförmiges Gehäuse 7 eingebettet, wobei das Gehäuse 7 eine Wärmesenke 5b bildet. Das Gehäuse 7 kann beispielsweise aus Stahlblech bestehen und weist in diesem Ausführungsbeispiel zwei Befestigungsvorrichtungen 9 auf, durch die die Katalysatoranordnung 1 an einem Innengehäuse 10 einer Abgasreinigungsvorrichtung 2 befestigt werden kann, beispielsweise durch Verschrauben. Durch eine lösbare Befestigung der Katalysatoranordnung 1 am Innengehäuse 10 einer Abgasreinigungsvorrichtung 2 kann die Katalysatoranordnung 1 besonders einfach serviciert (z.B. gereinigt oder getauscht) werden.

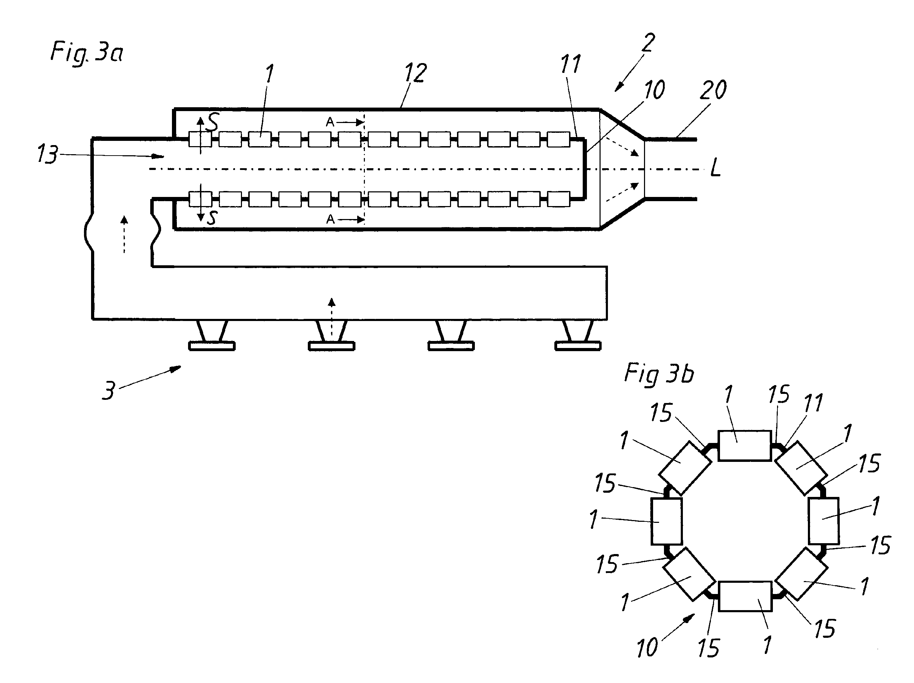

Fig. 3a zeigt schematisch ein Beispiel einer vorgeschlagenen Abgasreinigungsvorrichtung 2 bestehend aus einem Innengehäuse 10 und einem das Innengehäuse 10 umschließenden Außengehäuse 12. Das Innengehäuse 10 ist dabei rohrförmig ausgebildet. Es weist einen Gehäusemantel 11 auf und ist an der rechten Stirnseite geschlossen. Im Bereich der linken Stirnseite ist das Innengehäuse 10 mit einem Abgassammelrohr einer angedeuteten Brennkraftmaschine 3 verbunden. Die Strömungsrichtung der Abgase der Brennkraftmaschine 3 wird durch strichlierte Pfeile angedeutet. Entlang der Längsachse L des Innengehäuses 10 sind an dessen Gehäusemantel 11 vorgeschlagene Katalysatoranordnungen 1 angeordnet. Im gezeigten Beispiel strömt das Abgas durch das Abgassammelrohr der Brennkraftmaschine 3 und wird durch die Abgaseinlassöffnung 13 des Innengehäuses 10 in das Innere des Innengehäuses 10 eingebracht. Von hier aus strömt das Abgas entlang der Strömungsrichtungen S durch die einzelnen Katalysatoranordnungen 1 in Richtung des Außengehäuses 12 der Abgasreinigungsvorrichtung 2. Von dort aus verlässt das Abgas die Abgasreinigungsvorrichtung 2 über den Auslass 20 beispielsweise in Richtung Abgasturbolader.

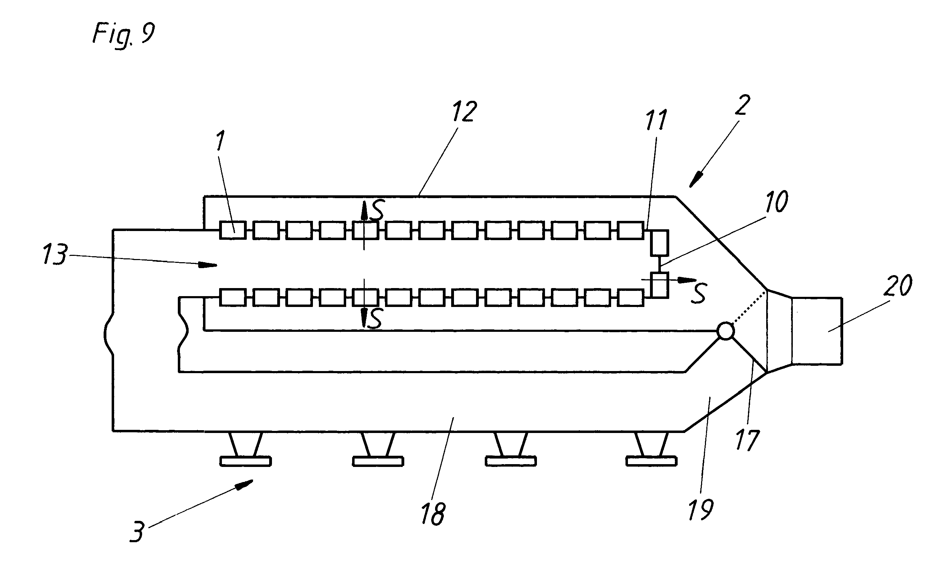

Zur Überwachung der Temperatur können eine oder mehrere Katalysatoranordnungen 1 mit Temperatursensoren ausgestattet sein, wobei sich diese Temperatursensoren unmittelbar vor oder nach der jeweiligen Katalysatoranordnung 1 oder auch innerhalb der Katalysatoranordnung 1 - beispielsweise zwischen einem katalytisch aktiven Bereich 4 und einer Wärmeaufnahmevorrichtung 5a - befinden können. Alternativ kann auch eine Wärmeaufnahmevorrichtung 5a innerhalb einer Katalysatoranordnung 1 zur Ermittlung der vorherrschenden Temperatur herangezogen werden. Durch eine Temperaturüberwachung kann die Gefahr einer Überhitzung frühzeitig erkannt und entsprechend gegengesteuert werden, beispielsweise durch Unterbrechung der Gaszufuhr zur Brennkraftmaschine 3, oder durch Absteuern des Abgases über eine Bypassleitung 19 (siehe Fig. 9).

Fig. 3b zeigt eine Schnittdarstellung gemäß Schnittlinie A-A des Innengehäuses 10 der Fig. 3a. Der Gehäusemantel 11 des Innengehäuses 10 ist dabei ein achtfach gekantetes Stahlblech. An den acht Seitenflächen 15 des Gehäusemantels 11 sind dabei die Katalysatoranordnungen 1 in Richtung der Längsachse L angeordnet. Eine Befestigung einer Katalysatoranordnung 1 an einer Seitenfläche 15 kann dabei über Befestigungsvorrichtungen 9 am Gehäuse 7 der Katalysatoranordnung 1 erfolgen (siehe Fig. 2).

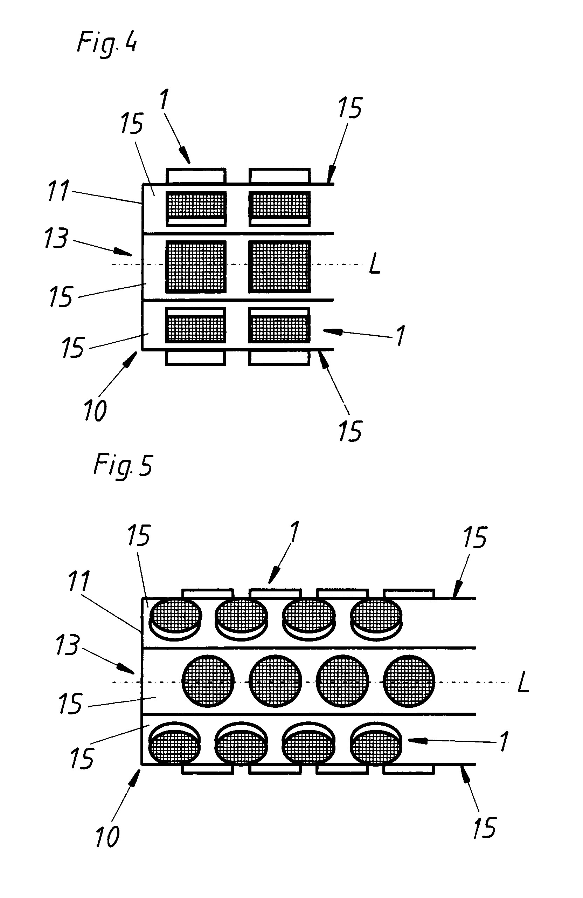

Fig. 4 zeigt die Draufsicht eines weiteren Beispiels eines Innengehäuses 10 mit daran angeordneten Katalysatoranordnungen 1. Die gitterförmig schraffierten Flächen deuten dabei die Austrittsflächen eines vom Abgas durchströmten Trägerkörpers 6 in Form einer Keramikmatrix an. In diesem Beispiel weisen die Katalysatoranordnungen 1 einen viereckigen Querschnitt quer zur Strömungsrichtung S auf. Die Katalysatoranordnungen 1 benachbarter Seitenflächen 15 des Gehäusemantels 11 sind dabei jeweils mit demselben Abstand zur Abgaseinlassöffnung 13 angeordnet.

Fig. 5 zeigt ein weiteres Beispiel eines Innengehäuses 10 und daran angeordneten Katalysatoranordnungen 1. In diesem Beispiel weisen die Katalysatoranordnungen 1 einen runden Querschnitt quer zur Strömungsrichtung S auf. Die Katalysatoranordnungen 1 von benachbarten Seitenflächen 15 des Gehäusemantels 11 sind dabei versetzt zueinander angeordnet. Damit kann eine höhere Packungsdichte erzielt werden. Darüber hinaus können dadurch die tragenden Stege zwischen den Katalysatoranordnungen 1 gleichmäßig verteilt werden.

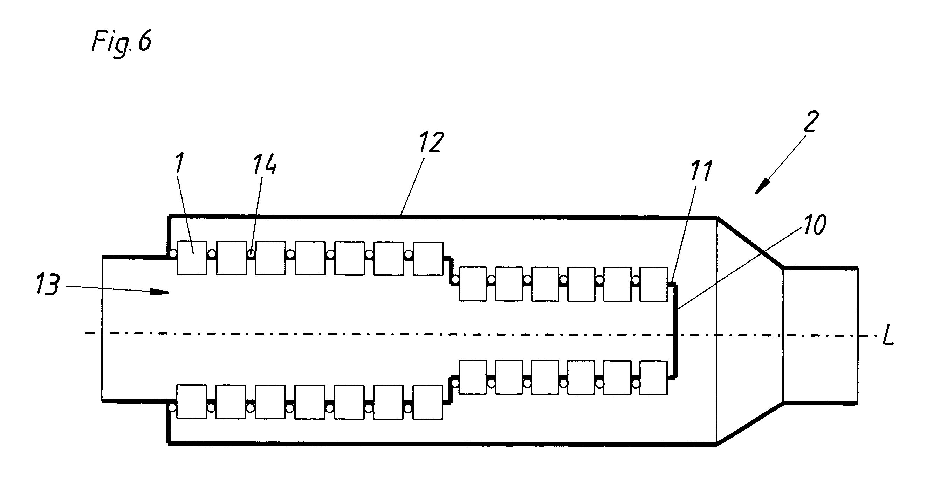

Zur Optimierung der Strömungsverhältnisse in einer Abgasreinigungsvorrichtung 2 können die Querschnitte des Gehäusemantels 11 des Innengehäuses 10 entlang der Längsachse L mehrere verschiedene Durchmesser aufweisen und damit die lokalen Abgas-Volumenströme angepasst werden. Fig. 6 zeigt schematisch das Beispiel einer Abgasreinigungsvorrichtung 2, bei dem der Gehäusemantel 11 des Innengehäuses 10 gestuft ausgeführt ist, wobei der Durchmesser des Querschnitts quer zur Längsachse L im Bereich der Abgaseinlassöffnung 13 einen höheren Wert aufweist als der Durchmesser eines Querschnitts des Gehäusemantels 11 im Bereich der geschlossenen Stirnseite des Innengehäuses 10. Durch einen solchen veränderlichen Strömungsquerschnitt des Innenbereichs des Innengehäuses 10 kann erreicht werden, dass die Strömungsgeschwindigkeiten des Abgases entlang der Längsachse L ein ähnliches Niveau aufweisen.

Zusätzlich sind in diesem Ausführungsbeispiel der Abgasreinigungsvorrichtung 2 Heizvorrichtungen 14 in Form von Heizdrähten zwischen in Längsrichtung L benachbarten Katalysatoranordnungen 1 vorgesehen. Durch diese Heizvorrichtungen 14 kann die Abgasreinigungsvorrichtung 2 beispielsweise vor dem Start der Brennkraftmaschine 3 (hier nicht gezeigt) auf Reaktionstemperatur vorgeheizt werden. Damit kann insbesondere das Emissionsverhalten beim Start und im Leerlauf der Brennkraftmaschine 3 sowie während des Hochfahrens der Brennkraftmaschine 3 verbessert werden.

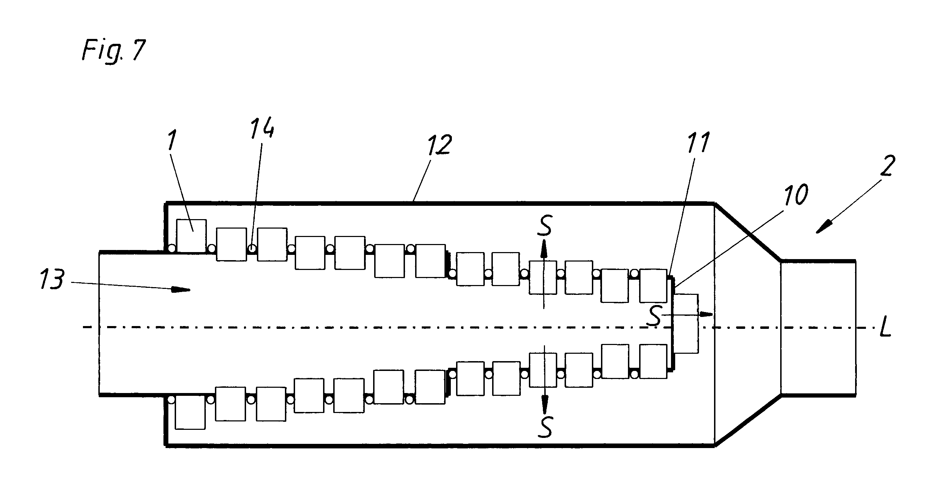

Fig. 7 zeigt ein weiteres Beispiel einer Abgasreinigungsvorrichtung 2 mit vorgeschlagenen Katalysatoranordnungen 1 gemäß Fig. 6. Zusätzlich zum gestuften Gehäusemantel 11 sind hierbei die Katalysatoranordnungen 1 in unterschiedlichen radialen Abständen zur Längsachse L angeordnet, sodass die radialen Abstände ausgehend von der Abgaseinlassöffnung 13 bis zur rechten stirnseitigen Fläche des Innengehäuses 10 kontinuierlich abnehmen. Dies verbessert die Strömungsverhältnisse der Abgasströmung im Inneren des Innengehäuses 10. An der rechten Stirnseite des Innengehäuses 10 ist in diesem Ausführungsbeispiel eine weitere Katalysatoranordnung 1 vorgesehen, deren Strömungsrichtung S parallel zur Längsache L verläuft.

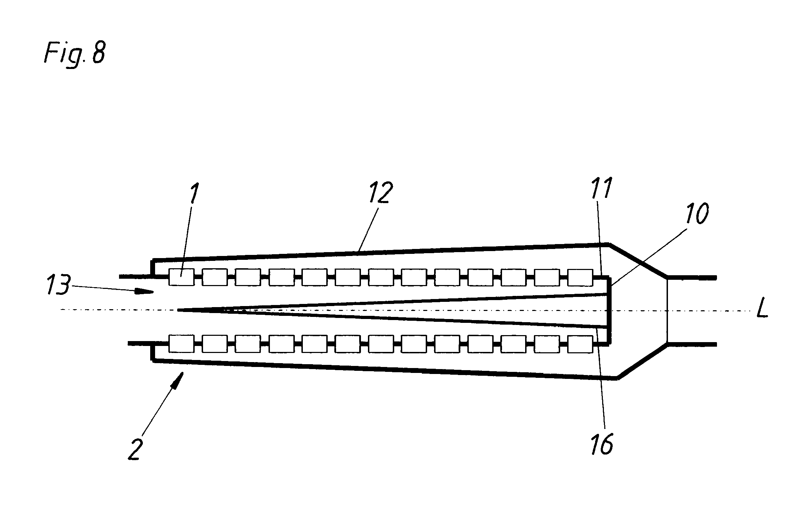

Fig. 8 zeigt einen schematischen Längsschnitt einer weiteren vorteilhaften Ausbildung einer Abgasreinigungsvorrichtung 2 mit vorgeschlagenen Katalysatoranordnungen 1, bei der im Inneren des Innengehäuses 10 eine kegelförmige Strömungslenkeinrichtung 16 vorgesehen ist. Diese Strömungslenkeinrichtung 16 kann das Anströmverhalten der Katalysatoranordnungen 1 verbessern. Auf der jeweils abströmenden Seite der Katalysatoranordnungen 1 ist das Außengehäuse 12 so gestaltet, dass sich der Abstand zwischen Außengehäuse 12 und Gehäusemantel 11 des Innengehäuses 10 von links nach rechts, also in Richtung eines zunehmenden Massestroms des durch die Katalysatoranordnungen 1 durchströmenden Abgases, vergrößert. Insgesamt ergibt sich durch die Anordnung dieses Ausführungsbeispiels eine strömungsoptimierte Bauweise bei gleichzeitiger Minimierung des Innenraums der Abgasreinigungsvorrichtung 2.

Fig. 9 zeigt schematisch den inneren Aufbau einer weiteren Abgasreinigungsvorrichtung 2 mit vorgeschlagenen Katalysatoranordnungen 1. Im Bereich der Abgaseinlassöffnung 13 des Innengehäuses 10 ist die Abgasreinigungsvorrichtung 2 mit einem Abgassammelrohr einer hier angedeuteten Brennkraftmaschine 3 verbunden, sodass das Abgas der Brennkraftmaschine 3 durch die Abgaseinlassöffnung 13 in den Innenraum des Innengehäuses 10 einströmen kann. Das Abgas strömt entlang der Strömungsrichtungen S durch die Katalysatoranordnungen 1 hindurch in den Raum zwischen Innengehäuse 10 und Außengehäuse 12. Von dort aus wird es über den Auslass 20 der Abgasreinigungsvorrichtung 2 beispielsweise in Richtung eines Abgasturboladers abgeführt. In diesem Beispiel weist das Abgassammelrohr 18 der Brennkraftmaschine 3 über eine Bypassleitung 19 eine direkte Verbindung zum Auslass 20 der Abgasreinigungsvorrichtung 2 auf. Über eine vorgesehene Abgaslenkvorrichtung 17 in Form einer Stellklappe kann dabei der Abgasvolumenstrom in einem beliebigen Verhältnis auf die beiden Leitungsführungen durch die Abgasreinigungsvorrichtung 2 und durch die Bypassleitung 19 aufgeteilt werden. Eine Aufteilung des Abgasvolumenstroms kann dabei auf Basis der Temperaturverhältnisse in der Abgasreinigungsvorrichtung 2 oder entsprechend motordynamischer Erfordernisse erfolgen, z.B. für den Start und Abstellvorgang der Brennkraftmaschine 3 oder für den raschen Hochlauf der Brennkraftmaschine 3.

**Patentansprüche**

1. Abgasreinigungsvorrichtung (2) für eine Brennkraftmaschine (3), insbesondere für einen stationären Gasmotor, mit wenigstens einer Katalysatoranordnung (1), wobei die wenigstens eine Katalysatoranordnung (1) entlang einer Strömungsrichtung (S) von einem Abgas der Brennkraftmaschine (3) durchströmbar ist und entlang der Strömungsrichtung (S) eine Mehrzahl von katalytisch aktiven, insbesondere voneinander unabhängigen, Bereichen (4, 4') umfasst, wobei eine Wärmeabführvorrichtung (5) vorgesehen ist, welche mindestens eine Wärmeaufnahmevorrichtung (5a) und eine Wärmesenke (5b) umfasst, wobei zumindest zwischen zwei katalytisch aktiven Bereichen (4, 4') die mindestens eine Wärmeaufnahmevorrichtung (5a) vorgesehen ist, wobei die mindestens eine Wärmeaufnahmevorrichtung (5a) mit der Wärmesenke (5b) kontaktiert ist, **dadurch gekennzeichnet, dass** die Abgasreinigungsvorrichtung (2) eine Mehrzahl von Katalysatoranordnungen (1) und ein, insbesondere rohrförmiges, Innengehäuse (10) mit einem Gehäusemantel (11) sowie ein das Innengehäuse (10) umschließendes Außengehäuse (12) umfasst, wobei das Innengehäuse (10) eine Längsachse (L) aufweist, wobei die Katalysatoranordnungen (1) getrennt voneinander am Gehäusemantel (11) des Innengehäuses (10) angeordnet sind.

2. Abgasreinigungsvorrichtung nach Anspruch 1, **da-**

**durch gekennzeichnet, dass** die Katalysatoranordnungen (1) entlang der Längsachse (L) des Innengehäuses (10) am Gehäusemantel (11) angeordnet sind.

3. Abgasreinigungsvorrichtung nach Anspruch 1 oder 2, **dadurch gekennzeichnet, dass** das Innengehäuse (10) eine Abgaseinlassöffnung (13) aufweist, wobei die Katalysatoranordnungen (1) ausgehend von der Abgaseinlassöffnung (13) entlang der Längsachse (L) in geringer werdenden radialen Abständen von der Längsachse (L) angeordnet sind.

4. Abgasreinigungsvorrichtung nach einem der Ansprüche 1 bis 3, **dadurch gekennzeichnet, dass** der Gehäusemantel (11) des Innengehäuses (10) in einem Querschnitt quer zur Längsachse (L) mehreckig, vorzugsweise achteckig, ausgebildet ist.

5. Abgasreinigungsvorrichtung nach einem der Ansprüche 1 bis 4, **dadurch gekennzeichnet, dass** eine Heizvorrichtung (14) zum Beheizen der katalytisch aktiven Bereiche (4, 4') zumindest einer der Mehrzahl von Katalysatoranordnungen (1) vorgesehen ist.

6. Abgasreinigungsvorrichtung nach Anspruch 5, **dadurch gekennzeichnet, dass** zwischen jeweils zwei entlang der Richtung der Längsachse (L) angeordneten Katalysatoranordnungen (1) jeweils eine Heizvorrichtung (14) angeordnet ist.

7. Abgasreinigungsvorrichtung nach einem der Ansprüche 1 bis 6, **dadurch gekennzeichnet, dass** jede der Mehrzahl von Katalysatoranordnungen (1) lösbar am Innengehäuse (10) befestigbar ist, vorzugsweise mittels Schraubverbindung.

8. Abgasreinigungsvorrichtung nach einem der Ansprüche 1 bis 7, **dadurch gekennzeichnet, dass** die Mehrzahl von katalytisch aktiven Bereichen (4, 4') jeweils einen, vorzugsweise keramischen, Trägerkörper (6) umfasst, wobei auf dem Trägerkörper (6) zumindest ein Katalysator, vorzugsweise eine Mehrzahl von Katalysatoren, aufgebracht ist.

9. Abgasreinigungsvorrichtung nach Anspruch 8, **dadurch gekennzeichnet, dass** wenigstens eine Katalysatoranordnung (1) in Strömungsrichtung (S) einen ersten katalytisch aktiven Bereich (4) und einen zweiten katalytisch aktiven Bereich (4') aufweist, wobei der Trägerkörper (6) des ersten katalytisch aktiven Bereichs eine geringere Katalysatorenbeladung aufweist als der Trägerkörper (6) des zweiten katalytisch aktiven Bereichs (4').

10. Abgasreinigungsvorrichtung nach einem der Ansprüche 1 bis 9, **dadurch gekennzeichnet, dass** die Wärmeaufnahmevorrichtung (5a) zumindest teilweise aus einem Material mit guter Wärmeleitfähigkeit und/oder mit hoher Wärmekapazität besteht.

11. Abgasreinigungsvorrichtung nach einem der Ansprüche 1 bis 10, **dadurch gekennzeichnet, dass** die Wärmeaufnahmevorrichtung (5a) mindestens eine Drahtgitterlage umfasst.

12. Abgasreinigungsvorrichtung nach einem der Ansprüche 1 bis 10, **dadurch gekennzeichnet, dass** die Wärmeaufnahmevorrichtung (5a) einen Metall- oder Keramikschaum umfasst.

13. Abgasreinigungsvorrichtung nach einem der Ansprüche 1 bis 12, **dadurch gekennzeichnet, dass** eine Kühlvorrichtung zur aktiven Kühlung der Wärmeaufnahmevorrichtung (5a) vorgesehen ist.

14. Abgasreinigungsvorrichtung nach einem der Ansprüche 1 bis 13, **dadurch gekennzeichnet, dass** jede der Mehrzahl von Katalysatoranordnungen (1) von einem Gehäuse (7) umschlossen ist, wobei das Gehäuse (7) die Wärmesenke (5b) bildet, wobei vorzugsweise zwischen Katalysatoranordnung (1) und Gehäuse (7) eine gut wärmeleitfähige Wärmetransportvorrichtung (8), vorzugsweise eine Metallfasermatte oder eine Einbettmasse, vorgesehen ist.

15. Abgasreinigungsvorrichtung nach Anspruch 14, **dadurch gekennzeichnet, dass** das Gehäuse (7) zumindest eine Befestigungsvorrichtung (9) zur Befestigung einer Katalysatoranordnung (1) am Gehäusemantel (11) des Innengehäuses (10) aufweist.

## Claims

1. Exhaust gas cleaning device (2) for an internal combustion engine (3), in particular for a stationary gas engine, with at least one catalytic converter arrangement (1), wherein exhaust gas from the internal combustion engine (3) can flow through the at least one catalytic converter arrangement (1) along a flow direction (S) and the device contains along the flow direction (S) a plurality of catalytically active, in particular mutually independent, regions (4, 4'), wherein a heat dissipation device (5) is provided that includes at least one heat absorbing device (5a) and a heat sink (5b), wherein the at least one heat absorbing device (5a) is provided between at least two catalytically active regions (4, 4'), wherein the at least one heat absorbing device (5a) is in contact with the heat sink (5b), **characterised in that** the exhaust gas cleaning device (2) includes a plurality of catalytic converter arrangements (1) and an, in particular tubular, inner housing (10) with a housing cover (11) as well as an outer housing (12) surrounding the inner housing (10), the inner housing (10) having a longitudinal axis (L), wherein the catalytic converter arrangements (1) are arranged separately from one another on the housing cover (11) of the inner housing (10).

2. Exhaust gas cleaning device according to claim 1, **characterised in that** the catalytic converter arrangements (1) are arranged along the longitudinal axis (L) of the inner housing (10) on the housing cover (11).

3. Exhaust gas cleaning device according to claim 1 or 2, **characterised in that** the inner housing (10) has an exhaust gas inlet opening (13), wherein the catalytic converter arrangements (1) are disposed starting from the exhaust gas inlet opening (13) along the longitudinal axis (L) at ever decreasing radial distances from the longitudinal axis (L).

4. Exhaust gas cleaning device according to one of claims 1 to 3, **characterised in that** the housing cover (11) of the inner housing (10) is formed having a polygonal, preferably octagonal, cross-section transverse to the longitudinal axis (L).

5. Exhaust gas cleaning device according to one of claims 1 to 4, **characterised in that** a heating device (14) is provided for heating the catalytically active regions (4, 4') of at least one of the plurality of catalytic converter arrangements (1).

6. Exhaust gas cleaning device according to claim 5, **characterised in that** in each case a heating device (14) is arranged between respectively two catalytic converter arrangements (1) arranged along the direction of the longitudinal axis (L).

7. Exhaust gas cleaning device according to one of claims 1 to 6, **characterised in that** each of the plurality of catalytic converter arrangements (1) can be releasably fastened, preferably by means of screws, to the inner housing (10).

8. Exhaust gas cleaning device according to one of claims 1 to 7, **characterised in that** the plurality of catalytically active regions (4, 4') includes in each case a preferably ceramic carrier body (6), wherein a catalyst, preferably a plurality of catalysts, is supported on the carrier body (6).

9. Exhaust gas cleaning device according to claim 8, **characterised in that** at least one catalytic converter arrangement (1) in the flow direction (S) has a first catalytically active region (4) and a second catalytically active region (4'), wherein the carrier body (6) of the catalytically active region has a lower catalyst loading than the carrier body (6) of the second catalytically active region (4').

10. Exhaust gas cleaning device according to one of claims 1 to 9, **characterised in that** the heat absorbing device (5a) consists at least partly of a material having a good thermal conductivity and/or a high heat capacity.

11. Exhaust gas cleaning device according to one of claims 1 to 10, **characterised in that** the heat absorbing device (5a) includes at least one wire lattice layer.

12. Exhaust gas cleaning device according to one of claims 1 to 10, **characterised in that** the heat absorbing device (5a) is a metal foam or ceramic foam.

13. Exhaust gas cleaning device according to one of claims 1 to 12, **characterised in that** a cooling device is provided for actively cooling the heat absorbing device (5a).

14. Exhaust gas cleaning device according to one of claims 1 to 13, **characterised in that** each of the plurality of catalytic converter arrangements (1) is surrounded by a housing (7), wherein the housing (7) forms the heat sink (5b), wherein a good thermally conducting heat transporting device (8), preferably a metal fibre mat or an embedded mass, is provided between the catalytic converter arrangement (1) and the housing (7).

15. Exhaust gas cleaning device according to claim 14, **characterised in that** the housing (7) comprises at least one fastening device (9) for fastening a catalytic converter arrangement (1) to the housing cover (11) of the inner housing (10).

**Revendications**

1. Dispositif de purification des gaz d'échappement (2) pour un moteur à combustion interne (3), en particulier pour un moteur à gaz stationnaire, avec au moins un agencement de catalyseurs (1), l'agencement de catalyseurs (1) au moins au nombre de un pouvant, le long d'une direction d'écoulement (S), être balayé par des gaz d'échappement du moteur à combustion interne (3) et comprenant le long de la direction d'écoulement (S) une pluralité de zones (4, 4') catalytiquement actives, en particulier indépendantes les unes des autres, un dispositif d'évacuation de chaleur (5) étant prévu, qui comprend au moins un dispositif d'absorption de chaleur (5a) et un puits de chaleur (5b), le dispositif d'absorption de chaleur (5a) au moins au nombre de un étant prévu au moins entre deux zones (4, 4') catalytiquement actives, le dispositif d'absorption de chaleur (5a) au moins au nombre de un étant mis en contact avec le puits de chaleur (5b), **caractérisé en ce que** le dispositif de purification des gaz d'échappement (2) comprend une pluralité d'agencements de catalyseurs (1) et un carter interne (10), en particulier de forme tubulaire, avec une enveloppe de carter (11) ainsi qu'un carter externe (12) entourant le carter interne (10), le carter interne (10) présentant un axe longitudinal (L), les agencements de catalyseurs (1) étant disposés séparément les uns des autres sur l'enveloppe de carter (11) du carter interne (10).

2. Dispositif de purification des gaz d'échappement selon la revendication 1, **caractérisé en ce que** les agencements de catalyseurs (1) sont disposés le long de l'axe longitudinal (L) du carter interne (10) sur l'enveloppe de carter (11).

3. Dispositif de purification des gaz d'échappement selon la revendication 1 ou 2, **caractérisé en ce que** le carter interne (10) présente une ouverture d'admission des gaz d'échappement (13), les agencements de catalyseurs (1) étant disposés à des distances radiales de l'axe longitudinal (L) qui diminuent en partant de l'ouverture d'admission des gaz d'échappement (13) le long de l'axe longitudinal (L).

4. Dispositif de purification des gaz d'échappement selon l'une des revendications 1 à 3, **caractérisé en ce que** l'enveloppe de carter (11) du carter interne (10) est constituée de façon polygonale, de préférence octogonale, dans une section transversale transversalement à l'axe longitudinal (L).

5. Dispositif de purification des gaz d'échappement selon l'une des revendications 1 à 4, **caractérisé en ce qu'**il est prévu un dispositif chauffant (14) destiné à chauffer les zones (4, 4') catalytiquement actives d'au moins un agencement parmi la pluralité d'agencements de catalyseurs (1).

6. Dispositif de purification des gaz d'échappement selon la revendication 5, **caractérisé en ce qu'**il est prévu respectivement un dispositif chauffant (14) entre respectivement deux agencements de catalyseurs (1) disposés le long de la direction de l'axe longitudinal (L).

7. Dispositif de purification des gaz d'échappement selon l'une des revendications 1 à 6, **caractérisé en ce que** chaque agencement parmi la pluralité d'agencements de catalyseurs (1) peut être fixé sur le carter interne (10) de façon détachable, de préférence au moyen d'un assemblage vissé.

8. Dispositif de purification des gaz d'échappement selon l'une des revendications 1 à 7, **caractérisé en ce que** la pluralité de zones (4, 4') catalytiquement actives comprend respectivement un corps de support (6), de préférence en céramique, au moins un catalyseur, de préférence une pluralité de catalyseurs, étant mis en place sur le corps de support (6).

9. Dispositif de purification des gaz d'échappement selon la revendication 8, **caractérisé en ce qu'**au moins un agencement de catalyseurs (1) présente dans la direction d'écoulement (S) une première zone (4) catalytiquement active et une deuxième zone (4') catalytiquement active, le corps de support (6) de la première zone catalytiquement active présentant une charge de catalyseurs plus faible que le corps de support (6) de la deuxième zone (4') catalytiquement active.

10. Dispositif de purification des gaz d'échappement selon l'une des revendications 1 à 9, **caractérisé en ce que** le dispositif d'absorption de chaleur (5a) est composé au moins partiellement d'un matériau ayant une bonne conductibilité thermique et/ou une capacité thermique élevée.

11. Dispositif de purification des gaz d'échappement selon l'une des revendications 1 à 10, **caractérisé en ce que** le dispositif d'absorption de chaleur (5a) comprend au moins une couche de grille de fils.

12. Dispositif de purification des gaz d'échappement selon l'une des revendications 1 à 10, **caractérisé en ce que** le dispositif d'absorption de chaleur (5a) comprend une mousse métallique ou céramique.

13. Dispositif de purification des gaz d'échappement selon l'une des revendications 1 à 12, **caractérisé en ce qu'**il est prévu un dispositif de refroidissement destiné au refroidissement actif du dispositif d'absorption de chaleur (5a).

14. Dispositif de purification des gaz d'échappement selon l'une des revendications 1 à 13, **caractérisé en ce que** chaque agencement de catalyseurs parmi la pluralité d'agencements de catalyseurs (1) est entouré d'un carter (7), le carter (7) formant le puits de chaleur (5b), un dispositif de transfert de chaleur (8) qui est un bon conducteur thermique, de préférence un mat de fibres métallique ou une masse d'enrobage, étant prévu de préférence entre l'agencement de catalyseurs (1) et le carter (7).

15. Dispositif de purification des gaz d'échappement selon la revendication 14, **caractérisé en ce que** le carter (7) présente au moins un dispositif de fixation (9) pour la fixation d'un agencement de catalyseurs (1) sur l'enveloppe de carter (11) du carter interne (10).

## Fig. 1a

Fig. 1b

Fig 2

Fig. 3a

Fig 3b

EP 2 668 382 B1

Fig. 4

Fig. 5

Fig. 6

Fig. 7

EP 2 668 382 B1

Fig. 8

Fig. 9

**EP 2 668 382 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10046278 A1
- US 5474745 A
- EP 1111212 A2